# EUROPEAN PATENT APPLICATION

(11) **EP 1 102 425 A2**
(43) Date of publication of application: **23.05.2001**
(21) Application number: 00125018.2
(22) Date of filing: 16.11.2000
(51) Int. Cl.: H04B 10/24

(54) **Optical transmission/reception apparatus**

(30) Priority: 16.11.1999 JP 32593299
(71) Applicant: SONY CORPORATION, Tokyo (JP)
(72) Inventor: Horie, Kazuyoshi, Shinagawa-ku, Tokyo (JP)
(74) Representative: Melzer, Wolfgang, Dipl.-Ing.

(57) **Abstract**

An optical transmission/reception apparatus has a coupling portion to be coupled to an end of an optical fiber, through which optical transmitting and receiving signals are transmitted. The apparatus includes a prism for directing the optical transmitting signal to be incident on an end face of the optical fiber when the optical fiber is coupled to the coupling portion. The apparatus also includes a photodetector for receiving the optical receiving signal radiated from the end face of the optical fiber. The prism directs the optical transmitting signal to be incident on the optical fiber with a numerical aperture smaller than a numerical aperture for the optical receiving signal. The prism directs at least a portion of the wavefront of the optical transmitting signal to be coincident and overlapped with only a portion of the wavefront of the optical receiving signal. The apparatus preferably also includes a light source from which the optical transmission signal is incident at the prism. The prism is disposed relative to said photodetector such that the optical receiving signal passes through the prism to be received at the photodetector.

## Description

### BACKGROUND OF THE INVENTION

### 1. FIELD OF THE INVENTION

The invention relates to an optical transmission/reception apparatus for use with uni-core bi-directional optical communication.

### 2. DESCRIPTION OF THE RELATED ART

There has hitherto been proposed optical communication for transmitting/receiving optical signals through an optical fiber. In this optical communication, an optical transmissionlreception apparatus is used.

Recently, with improvement in information communication terminals, typified by a personal computer, cost reduction and with a rapidly increasing demand for computer communication, such as in Internet, it is thought to be desirable to put the infrastructure of the high-speed data communication in a public communication network into order. For coping with the increasing speed and with the increasing area of the communication network, it is necessary to promote adaptation of the communication network from the telephone station up to subscribers, that is households or offices, to the optical communication of the so-called accessing system (accessing network). An example of the communication network, adapted to the optical communication, is a so-called fiber-to-the-home (FTTH).

However, for realizing the FTTH, it is required to put an equipment of a larger scale into order. Such equipment may be enumerated by an optical fiber laid and an optical network unit (ONU) placed on the subscriber side.

The ONU means an optical transmission/reception device for converting optical signals sent from the telephone station into electrical signals, or converting the electrical signals transmitted from the subscribed side into optical signals, which are transmitted to the telephone station. The ONU transmits/receives data through a sole optical fiber. Therefore, the ONU is in need of a light waveguide path of Y-branching for splitting the light signals into optical signals for transmission and those for reception, and a beam splitter, Moreover, in optical communication, there are occasions wherein optical signals are transmitted/received on wavelength multiplexing into two wavelengths, such as 1.3 m and 1.55 m. In such case, the ONU is in need of a wavelength selecting element, such as a wavelength filter.

For satisfying these functions, conventional ONUs are constructed using specially prepared semiconductor laser units, light receiving elements and waveguides operating as an optical path.

In this sort of the optical transmission/reception apparatus, since the optical components, making up the optical transmission/reception apparatus, are prepared for exclusive use for constituting the ONU, it is difficult to simplify the structure or to lower the cost.

For quickly realizing the adaptation of the access network to optical communication, it is crucial to realize the FTTH at a low investment cost However, the optical system of the ONU partially accounts for increased capital investment.

It is therefore an object of the present invention to provide an optical transmissionlreception apparatus which can be manufactured to a small size at a low cost using optical components of a simplified structure.

### SUMMARY OF THE INVENTION

For accomplishing the above object, the present invention provides an optical transmission/reception apparatus connected to an optical fiber operating as a communication circuit in an optical communication circuit, in which an optical signal for transmission is caused to fall on an end face of the optical fiber, with an optical signal for reception transmitted through the optical fiber to exit from an end face of the optical fiber being received by the optical transmission/reception apparatus. The optical transmission/reception apparatus includes light emitting means for radiating the optical signal for transmission, light beam incidence means for causing the optical signal for transmission radiated by the light emitting means to be incident on the end face of the optical fiber, and light reception means for receiving the optical signal for reception radiated from the end face of the optical fiber. The light beam incidence means causes a light beam of the optical signal for transmission to be incident on the optical fiber with a numerical aperture smaller than the numerical aperture of a light beam of the optical signal for reception radiated from the end face of the optical fiber.

With the present optical transmissionlreception apparatus, the light beam incidence means causes at least a portion of the wavefront of the optical signal for transmission to be coincident and overlapped with at least a portion of the wavefront of the optical signal for reception.

According to the present invention, a small-sized optical transmission/reception apparatus can be manufactured easily and inexpensively from simplified optical components to realize a communication network termed a fiber-to-the home.

### BRIEF DESCRIPTION OF THE DRAWINGS

Fig. 1 is a block diagram showing a structure for information communication of an accessing system including an optical transmission/reception apparatus.

Fig. 2A is a block diagram schematically showing a structure of the optical transmission/reception apparatus of Fig. 1 including a light module

Fig. 2B is a perspective schematic view of a related art light module unit.

Fig. 3 is a longitudinal cross-sectional view showing the structure of an optical module unit constituting the optical transmission/reception apparatus.

Fig. 4 is a side view schematically showing the position of incidence of the optical signal for transmission to the coupling lens in the optical module unit.

Fig. 5 is a transverse cross-sectional view showing the structure of an optical fiber of the optical transmission/reception apparatus.

Fig. 6 is a longitudinal cross-sectional view showing the state of total reflection occurring in an optical fiber in the optical transmission/reception apparatus.

Fig. 7 is a longitudinal cross-sectional view showing a configuration in which a light reception unit is arranged at a position immune from optical crosstalk by the reflected light beam of the optical signal for transmission produced on an end face of the optical fiber in the optical transmission/reception apparatus.

Fig. 8 is a longitudinal cross-sectional view showing the structure provided with a light interrupting unit to prevent optical crosstalk from occurring due to the reflection light beam of the optical signal for transmission generated on an end face of the optical fiber in the optical transmission/reception apparatus.

Fig. 9 is a side view showing a structure in which a coupling lens on the side light source of the optical transmission/reception apparatus is replaced by a concave mirror.

Fig. 10 is a longitudinal cross-sectional view showing a structure accommodating the wavelength multiplexed communication in the optical transmission/reception apparatus.

Fig. 11 is a longitudinal cross-sectional view showing a structure in which the tuming mirror in the optical transmission/reception apparatus shown in

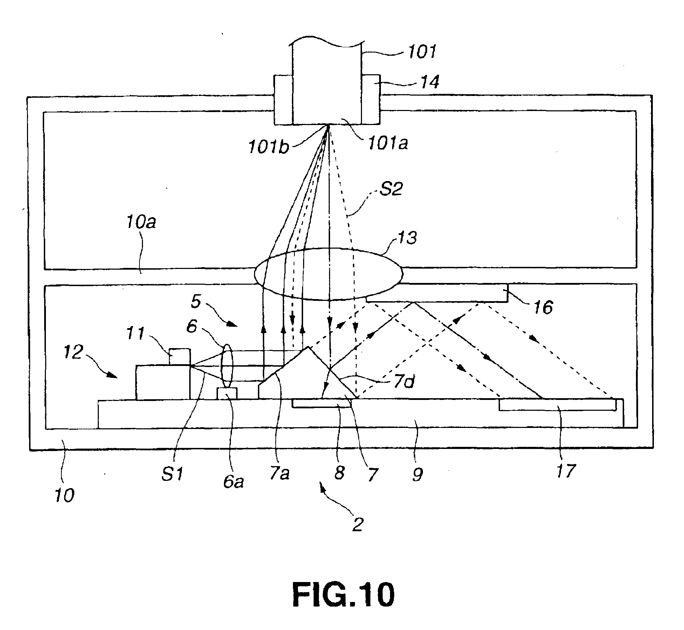

Fig.10 is replaced by a concave mirror.

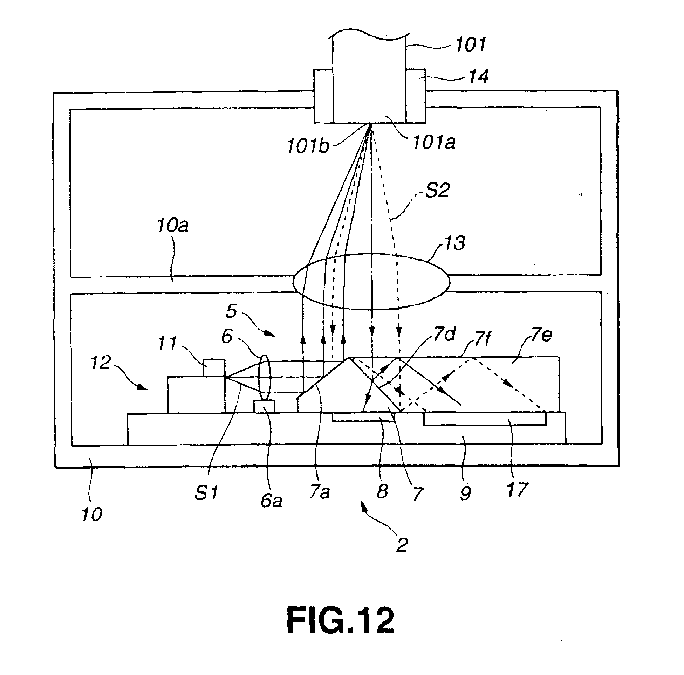

Fig. 12 is a longitudinal cross-sectional view showing a structure in which the turning mirror in the optical transmission/reception apparatus shown in Fig.10 is replaced by a fuming prism.

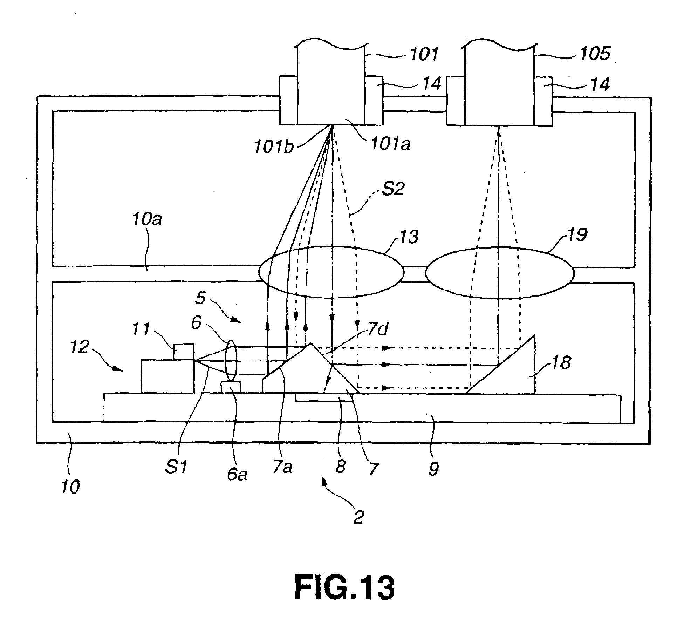

Fig. 13 is a longitudinal cross-sectional view showing an optical system for relaying an optical signal of a given wavelength to another optical
transmission/reception apparatus in case of transmission/reception of an optical signal of plural wavelengths in the optical transmission/reception apparatus according to the present invention.

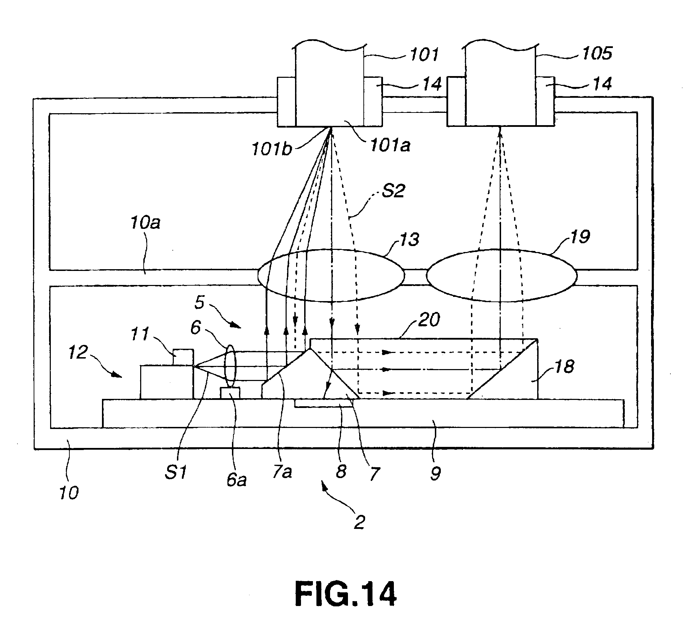

Fig. 14 is a longitudinal cross-sectional view showing a structure in which a relaying prism is mounted ahead of the turning mirror in the optical transmission/reception apparatus shown in Fig.13.

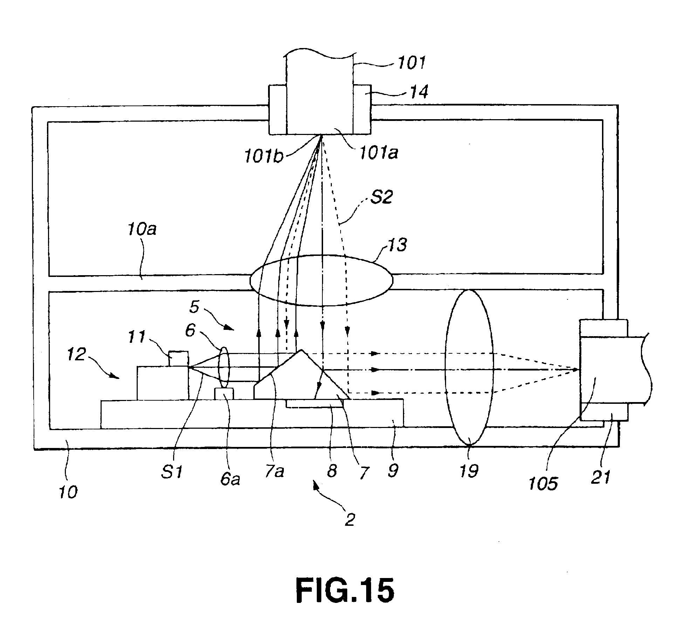

Fig. 15 is a longitudinal cross-sectional view showing a structure not employing a turning mirror in the optical transmission/reception apparatus shown in Fig.13.

### DETAILED DESCRIPTION OF THE PREFERRED EMBODIMENTS

Referring to the drawings, preferred embodiments of the present invention will be explained in detail.

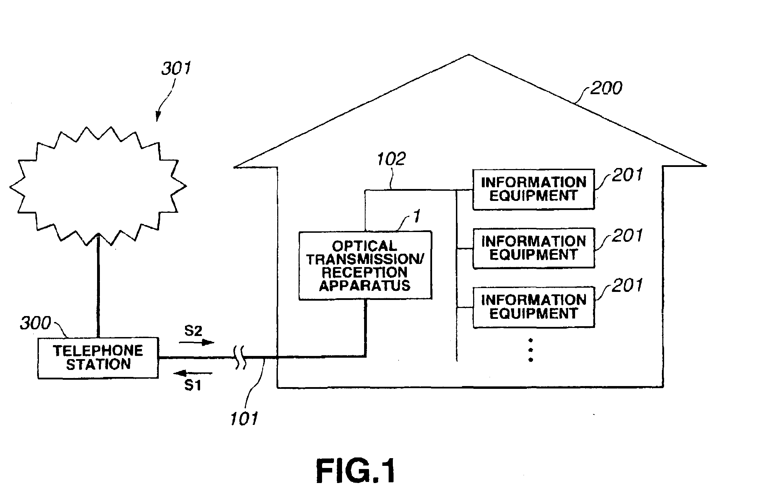

The optical transmission/reception apparatus 1 is used in order for information equipment 201 in a household or in an office 200 to exchange information with an external network 301 via e.g., a telephone station 300, as shown in Fig.1.

The optical transmission/reception apparatus 1, installed in the household or office 200, is connected to the telephone station 300 through an optical fiber 101, and is able to have communication with the external network 301 through the telephone station 300. The external network 301 is preferably a public telephone network or Internet. Simultaneously, the optical transmission/reception apparatus 1 is connected over a signal line 102 to information equipment 201 in the household or office 200, and is able to distribute the information from the external network 301 to each of multiple information equipment 201 or conversely to distribute the information from each of the multiple information equipment 201 to the external network 301. The information equipment 201 may be, for example, a computer, a television telephone or cable television.

The information transmitted from each of the information equipment 201 is transmitted from the optical transmission/reception apparatus 1 as an optical signal for transmission S1. The information sent from the external network 301 to each of the information equipment 201 is received by the optical transmission/reception apparatus 1 as an optical signal for reception S2.

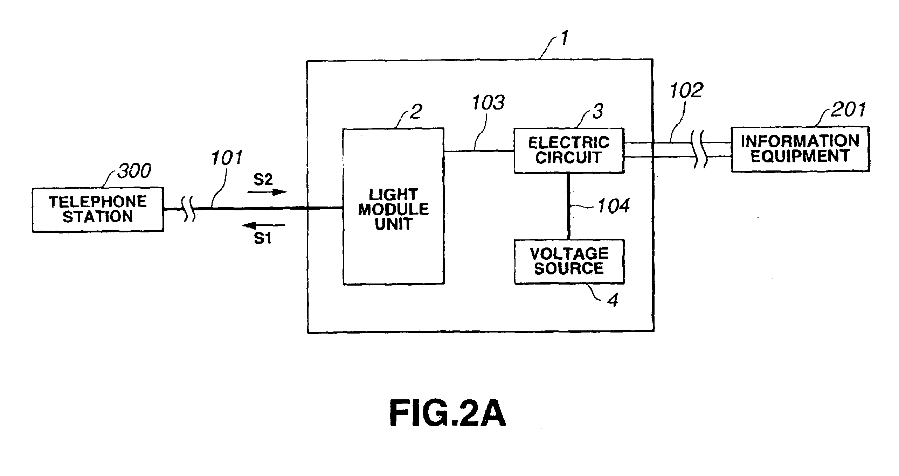

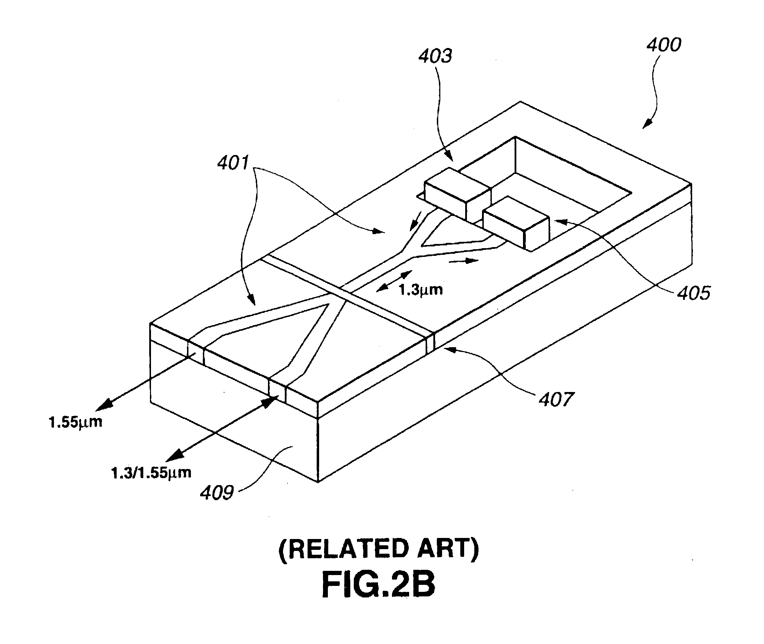

The optical transmission/reception apparatus 1 according to the preferred embodiment preferably includes an optical module unit 2, an electric circuit unit 3 and a voltage source unit 4, as shown in Fig.2A. The optical module unit 2 is made up of a light source, such as a semiconductor laser, and a lens for optically coupling the light radiated by the light source to the optical fiber 101.

The electric circuit unit 3 performs the function of modulating a light flux emitted by the light source of the optical module unit 2 responsive to the electrical signal transmitted to the telephone station 300, and the function of amplifying the optical signal S2 from the telephone station 300 received by a light receiving element of the optical module unit 2. This electric circuit unit 3 and the optical module unit 2 are interconnected over a signal line 103. The received signal, amplified by the electric circuit unit 3, is transmitted over the signal line 102 to each of the information equipment 201 of Fig.1.

The voltage source unit 4 furnishes power to the electric circuit unit 3. The voltage source unit 4 and the electric circuit unit 3 are interconnected by a voltage source line 104.

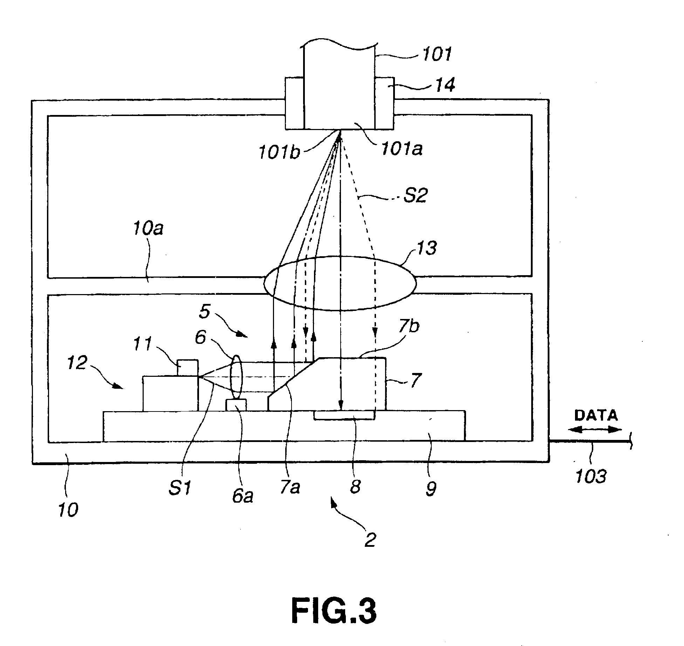

Fig. 2B is a perspective schematic view of a related art light module unit 400. The related art light module unit 400 shown at Fig. 2B has a light waveguide 401. a laser diode 403, a photodiode 405 and a wavelength filter 407. The architecture of the related art light module unit is formed on a silicon substrate 409. The laser diode emits optical transmission signals at a wavelength of 1.3 µm which travel along the waveguide 401 and out of the unit light module 400. Optical reception signals are received at the light module unit at wavelengths of 1.3 and 1.55 µm. The 1.3 µm optical reception signals are received at the photodiode 405. The 1.55 µm optical reception signals are filtered at the wavelength filter 407 and do not reach the photodiode 405. The related art light module unit 400, just described, is disadvantageously large and complex and requires a wavelength filter that extinguishes the 1.55 µm reception optical signals. Therefore, the preferred embodiment uses the advantageous optical module unit 2 schematically shown at Fig. 3 and described below.

The optical transmission/reception apparatus 1 of the preferred embodiment features an optical module unit 2 which is configured for performing uni-core bi-directional optical communication with the telephone station 300 using the optical fiber 101, as shown in Fig.3. The optical module unit 2 includes package 10. Within this package 10 are enclosed a semiconductor laser 11, as a light source, a set of optical elements 5, as light flux incidence means, and a photodiode 8, as light receiving means, to constitute an optical module unit 2. The optical fiber 101 has one end 101a detachably fitted to the connector 14 as coupling means provided in the package 10 of the optical module unit 2. The connector 14 is able to position the optical fiber 101 immovably with respect to the package 10. One skilled in the art would understand that there are many ways to couple an optical fiber 101 to the package 10, and the optical fiber 101 may be coupled to the package 10 in any of these ways in accord with the preferred embodiment

The semiconductor laser 11 is provided on a semiconductor element 12 mounted on a semiconductor substrate 9 secured in the package 10. This semiconductor laser 11 emits a laser light flux L with a wavelength of, for example, 1.3 µm. This laser light flux L becomes the optical signal for transmission S1 to be transmitted. This semiconductor laser 11 is driven by the electric circuit unit 3 within the optical transmission/reception apparatus 1. This electric circuit unit 3 drives the semiconductor laser 11 for generating the optical signal for transmission S1 over the signal line 103. This optical signal for transmission S1 has been modulated on the basis of data transmitted from information equipment 201.

The set of one or more optical elements 5 is arranged on an optical path between the semiconductor laser 11 and the optical fiber 101. The set of optical elements 5 warps the optical path of the laser light flux L to cause the optical signal for transmission or optical transmission signal S1 to fall on one end of the optical fiber 101 This set of optical elements 5 is preferably made up of a first coupling lens 6, a lens base 6a for supporting the first coupling lens 6, an optical path uplifting prism 7 and a second coupling lens 13.

The lens base 6a supports the first coupling lens 6 for facing the semiconductor laser 11. The optical path uplifting prism 7 includes a reflecting surface 7a, inclined, e.g., at 45°, relative to the upper surface of the semiconductor substrate 9 and an upper surface 7b preferably parallel to the upper surface of the semiconductor substrate 9. This optical path uplifting prism 7 is arranged with the reflecting surface 7a directed toward the semiconductor laser 11, and has the function of reflecting the laser light flux L, beam-shaped by the first coupling lens 6, by the reflecting surface 7a to warp the optical path. The inclined surface 7a of the optical path uplifting prism 7, operating as the reflecting surface 7a, is provided e.g., with a total reflection film or high reflectivity coating.

The second coupling lens 13 is disposed along the path of the laser light flux L from the semiconductor laser 11 to the optical fiber 101, while also being disposed along the optical path of the optical signal for reception or optical receiving signal S2 as radiated light from the optical fiber 101 to the photodiode 8 as light receiving means. This second coupling lens 13 is secured in the package 10 by a lens support 10a provided in and forming a portion of the package 10.

The photodiode 8 receives the optical signal for reception S2 from the optical fiber 101 to convert this optical signal for reception S2 into electrical signals. This photodiode 8 sends the electrical signals through the signal line 103 to the electric circuit unit 3 in the optical transmission/reception apparatus 1. The electric circuit unit 3 amplifies the electrical signals sent from the photodiode 8 to send out the amplified signals to information equipment 201.

The above-described semiconductor laser 11, semiconductor element 12, first coupling lens 6, lens base 6a and the optical path uplifting prism 7 are mounted on the semiconductor substrate 9. The photodiode 8 is preferably formed so as to be embedded in the semiconductor substrate 9.

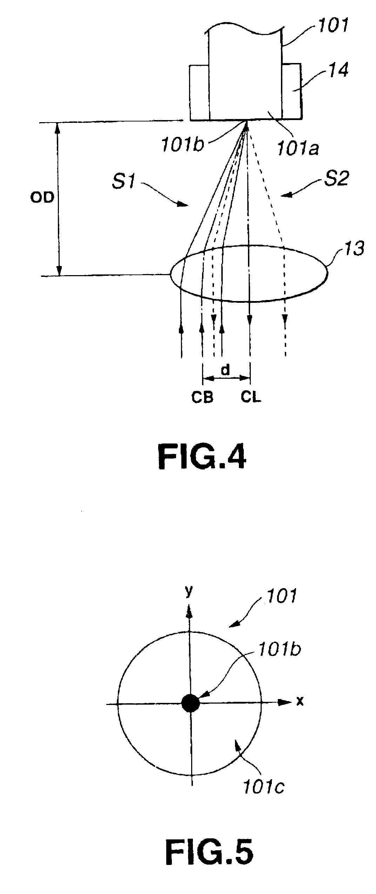

Referring to Figs.3 and 4, the operation of the optical transmission/reception apparatus 1, employing the optical signal for transmission S1 and the optical signal for reception S2 in the optical module unit 2, is explained in detail.

A laser light flux L, emitted by the semiconductor laser 11, is collimated by the first coupling lens 6 to fall as a collimated light beam on the reflecting surface 7a of the optical path uplifting prism 7. The laser light flux L, having its optical path warped by the optical path uplifting prism 7, that is the optical signal for transmission S1, falls on the second coupling lens 13. At this time, the center of intensity CB of the laser light flux L falls on the second coupling lens 13, with a beam diameter smaller than the light stop of the second coupling lens 13, at a position offset a distance d from the center axis CL of the second coupling lens 13. That is, this optical signal for transmission S1 falls on the optical fiber 101 with a numerical aperture smaller than that of the second coupling lens 13.

The second coupling lens 13 is separated a distance OD from a core 101 b of the optical fiber 101. This distance OD is equal to the focal length of the second coupling lens 13. That is, the optical signal for reception S2, as light radiated by the second coupling lens 13, is collimated by the second coupling lens 13. At this time, the optical signal for reception S2 falls on the second coupling lens 13 at a numerical aperture larger than the numerical aperture of the optical signal for transmission falling on the optical fiber 101, and preferably approximately equal to that of the second coupling lens 13. On the other hand, the laser light flux L, as the optical signal for transmission S1, is also a collimated light beam, and falls on the second coupling lens 13 so as to be focussed on an end face of the core 101 of the optical fiber 101.

The set of optical elements 5 causes the light beam of the optical signal for transmission S1 to fall on the optical fiber 101 with a numerical aperture smaller than that of the light beam of the optical signal for reception S2 radiated from the end face of the optical fiber 101.

The optical signal for transmission S1, incident from the core 101b of the optical fiber 101, is propagated through the optical fiber 101 and transmitted to the telephone station 300.

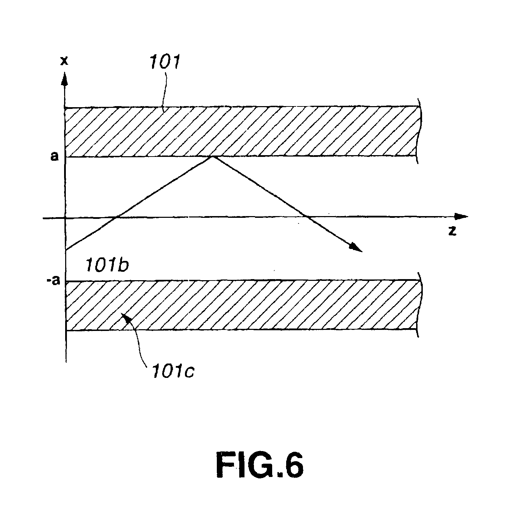

As an illustrative structure of the optical fiber 101, the optical fiber 101 in general is made up of a portion termed the core 101b and a portion termed a clad 101c, as shown in Figs. 5 and 6. Since the refractive index of the core 101 b is higher than that of the clad 101c, the light through the optical fiber 101 is propagated as it undergoes repeated total reflection on the interface between the core 101b and the clad 101c. The diameter of the preferred core 101b is of the order of 5 µm, in case of a quartz-based optical fiber, with the diameter of the preferred clad 101c being of the order of 125 µm.

The optical signal for reception S2, as the light radiated from the optical fiber 101,a s shown in Fig.3, is collimated by the second coupling lens 13, then falls into the inside of the optical path uplifting prism 7 from its upper surface 7b, and then exits the bottom surface of the optical path uplifting prism 7 to fall on the photodiode 8. The upper surface 7b of the optical path uplifting prism 7 is preferably coated with an anti-reflection film to permit the optical signal for reception S2 to be transmitted efficiently to the photodiode 8 with minimum reflection from the surface 7b.

On the other hand, since the center of intensity CB of the laser light flux L is offset by the distance d from the center axis CL of the second coupling lens 13, it is possible to prevent the optical signal for reception S2 from being substantially reflected by the reflecting surface 7a, and such that preferably only an outer fraction, if any, of the total collimated optical receiving signal impinges upon the surface 7a and at least the substantial fraction of the collimated optical receiving signal transmits instead through the surface 7b.

The optical signal for reception S2 is photoelectrically converted by the photodiode 8 and transmitted to the electric circuit unit 3 through the signal line 103 of Fig.2A to complete the light transmitting/receiving operation.

As discussed above, in the optical system of the optical module unit 2 of the preferred embodiment, the collimated optical signal for transmission S1 is caused to fall on a portion of the second coupling lens 13 so that the optical signal for transmission S1 and the optical signal for reception S2 will be overlapped on each other on the photodiode sides of the first coupling lens 6 and the second coupling lens 13. That is, a portion of the wavefront of the optical signal for reception S2 transmitted through the second coupling lens 13 of the optical signal for reception S2 coincides with a portion of the wavefront of the optical signal for transmission S1 transmitted through the first coupling lens 6. A portion of the wavefront of the optical transmitting signal S1 may be coincident and overlapped with a portion of the optical receiving signal S2, or the entire optical transmitting signal S1 may be coincident and overlapped with a portion of the optical receiving signal S2. Meanwhile, the wavefront herein means an equiphase plane of the electrical field of a light beam. The fact that the above-mentioned two wavefronts coincide on the photodiode 8 side of the second coupling lens 13 means that the optical signal for transmission S1 is focussed on the end face of the core 101b on the optical fiber 101 side of the second coupling lens 13.

Therefore, if the wavefront of the optical signal for transmission S1 coincides with that of the optical signal for reception S2 on the photodiode 8 side of the second coupling lens 13, then the light beams may be less than fully collimated light beams. However, if the two light beams are substantially collimated, wavefront coincidence can be achieved most readily.

The optical transmission/reception apparatus 1 of the preferred embodiment can be configured to enable the so-called uni-core bi-directional optical communication. This uni-core bi-directional optical communication may be classified into semi-duplex optical communication and the full-duplex optical communication. The semi-duplex optical communication is a transmission system in which transmission is possible only in one direction at a given time point. In this sense, the semi-duplex optical communication may be compared to one-side alternate road traffic. The full-duplex optical communication means a transmission system in which transmission is possible in two directions simultaneously. In full-duplex optical communication, optical crosstalk, which is not problematical in the case of the semi-duplex optical communication, sometimes raises a serious problem.

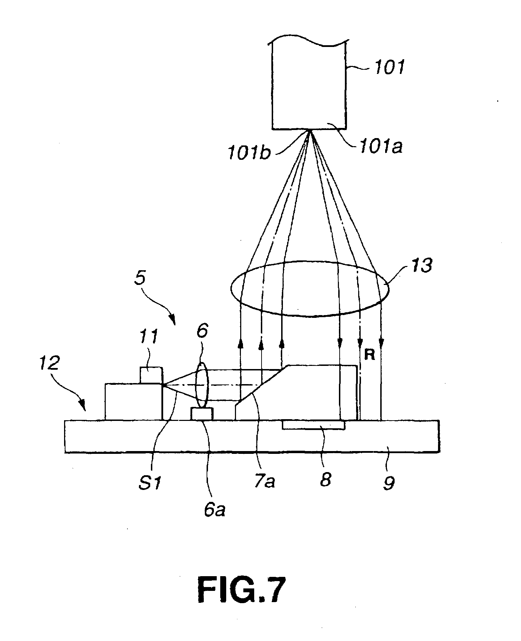

This optical crosstalk may be produced when the optical signal for transmission S1 is sent out and is reflected, e.g., on the end face of the optical fiber 101 to fall on the photodiode 8 of the optical transmissionlreception apparatus 1 as a source of transmission, as illustrated at Fig.7. On occurrence of this optical crosstalk, the signal-to-noise ratio (S/N) of the optical signal for reception S2, transmitted from the telephone station, e.g., is deteriorated, such that the transmission distance by the optical fiber 101 is shortened or the data reception error is increased. Therefore, in the case of the full-duplex uni-core bi-directional optical communication, it is desired to minimize or reduce the effect of this optical crosstalk.

In one preferred optical transmission/reception apparatus 1, the photodiode 8 is arranged so that, when the optical signal for transmission S1 is reflected by the end face of the core 101b of the optical fiber 101 and the resulting reflected light R is illuminated on the semiconductor substrate, the reflected light R is in an area offset from the area of illumination by the reflected light R, as illustrated at Fig. 7. So, in the present optical transmissionlreception apparatus 1, there is reduced risk of the laser light flux L being reflected on the end face of the core 101 b to fall on the photodiode 8, so that the optical crosstalk is reduced or minimzed by the reflected light R. Fig. 7 shows a small amount of the reflected signal S1 impinging upon the photodetector 8 which would cause a very small amount of crosstalk. The system may also be arranged such that no portion of the reflected signal S1 impinges upon the photodetector 8. Whether any portion of the reflected signal S1 from the end face 101b of the optical fiber 101 is incident at the photodetector 8 will depend on choices made in a balancing of a desire to have a small size and high resolution with low crosstalk.

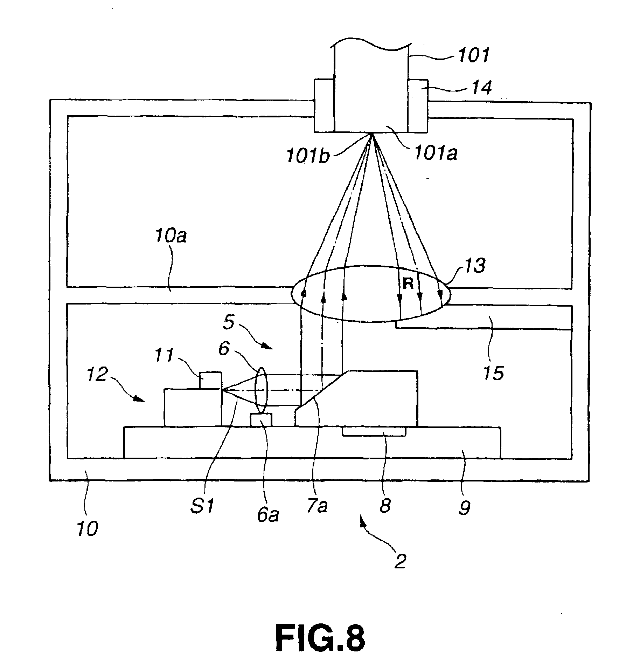

Referring to Fig.8, it is also possible to provide a beam stop or light interrupting member 15 interrupting the reflected light R, preferably which has already passed through the second coupling lens 13, to prevent a portion or substantial portion or substantially all of the reflected light R from falling on the photodiode 8 to diminish the optical crosstalk It is desired to choose a light interrupting member in this embodiment that does not block too much of the optical receiving signal S2 from reaching the photodetector 8, and thus a balancing may be performed between blocking a substantial portion of the reflected transmitting signal S1 that is reflected from the end face 101b of the optical fiber 101 and allowing the substantial portion of the optical receiving signal S2 to pass by the stop 15 and ultimately impinge upon the detector 8. This light interrupting member 15 may be provided not only at a position interrupting the reflected light R directly after its transmission through the second coupling lens 13 but also at a position interrupting the reflected light R prior to its incidence on the second coupling lens 13.

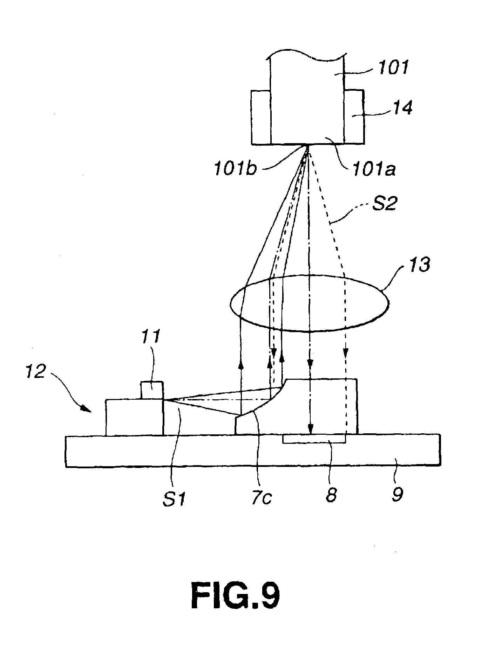

Moreover, in the present optical transmission/reception apparatus 1, the reflecting surface of the optical path uplifting prism 7 may be configured as a concave mirror 7c, as shown in Fig.9, whereby the first coupling lens 6 and the lens base 6a of the embodiment of Fig.3 may be left out or eliminated. The concave mirror 7c may be designed to present a cylindrically curved surface having a curvature only in one direction. The choice of a concave surface 7c or cylindrical surface 7c will depend on the choice of diode laser beam configuration. The geometry of the lens 13 may be similarly chosen accordingly.

If the optical transmission/reception apparatus 1 is demanded to receive two wavelengths, as when the optical signal for reception S2 is a so-called wavelength multiplexed optical signal for reception and comprises a light beam of a wavelength of 1.3 µm and a light beam of a wavelength of 1.55 µm, the upper surface, or surface adjacent to reflecting surface 7a, of the optical path uplifting prism 7 is preferably designed as an inclined partial reflection film 7d. This partial reflection film 7d is preferably designed so that it transmits a component of the collimated light beam of the receiving signal S2 with a wavelength of 1.3 µm and reflects a component of the collimated light beam of the receiving signal S2 having a wavelength of 1.55 µm. Alternatively, the 1.3 µm and 1.55 µm signals may be otherwise separated as understood by those skilled in the art, such as by using the wavelength dependent nature of the dispersive properties of the prism, or by using prism-grating ("grism") by forming a grating structure on the prism surface 7d, and corresponding placement of the two detectors 8 and 17 to detect the separated beam portions.

Since the preferred partial reflection film 7d is designed in this manner, optical signals with the wavelength of 1.3 µm are transmitted through the optical path uplifting prism 7 and received by the photodiode 8, whereas optical signal with the wavelength of 1.55 µm are reflected by the partial reflection film 7d. As shown in Fig. 10, the reflected 1.55 µm component may be again reflected by a turning mirror 16 so as to be received by another photodiode 17. Meanwhile, the turning mirror 16 is preferably a total reflection mirror. The turning mirror 16 may also serve at least a partial function as a beam stop or light interrupting means 15, such as that described above with respect to Fig. 8

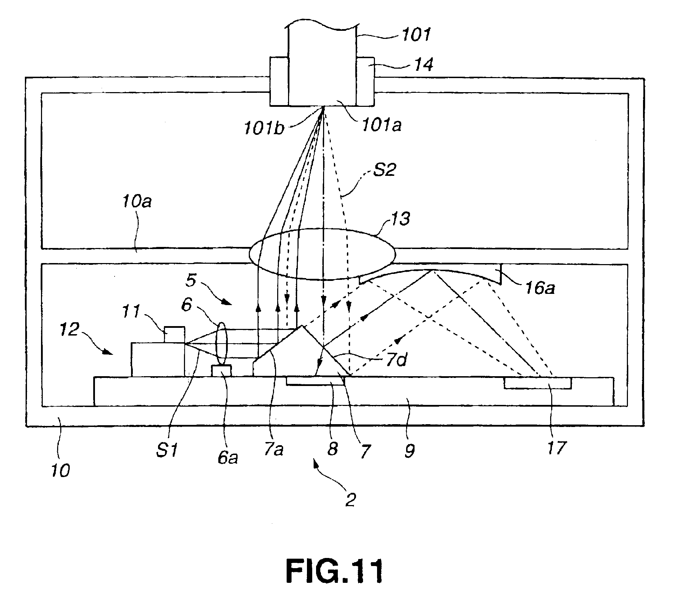

The turning mirror 16 may also be designed as a concave mirror 16a, as shown in Fig. 11. If the concave mirror 16a is used as a turning mirror, the light beam reflected by the concave mirror 16a is converged, thus enabling the beam diameter of the light beam incident on the photodiode 17 to be diminished. Thus, in this embodiment, the photodiode 17 may be reduced in size A converging lens also be placed in the beam path of the reflected 1.55 µm component of the receiving signal S2 to converge the beam prior to being incident on the detector 8.

A turning prism 7e may be provided on the photodiode 17, in adjacency to the optical path uplifting prism 7, in place of the tuming mirror 16. The turning prism 7e would preferably include a mirror portion 7f on which falls the optical signal reflected by the partial reflection film 7d and which reflects the optical signal in its substantial entirety for incidence on the photodiode 17. Meanwhile, if the optical path uplifting prism 7 and the turning prism 7e are previously bonded to each other and are bonded together on the semiconductor substrate 9, only one bonding step to the semiconductor substrate 9 suffices. In this case, the steps of adjustment and bonding may be simpler than in the configuration employing the turning mirror 16 or 16a (or the converging lens), thus improving efficiency in the manufacturing operation.

If this optical transmission/reception apparatus 1 is used as an ONU, there are occasions where it is desired to relay the optical signal with the wavelength of 1.55 µm to another optical transmission/reception apparatus. In such case, an optical fiber 105 for relaying an optical signal with the wavelength of 1.55 µm may be connected to the package 10, as shown in Fig.13. Within the package 10, there are provided a coupling lens 19 for converging the beam for relaying, for coupling the optical signals to be relayed to the optical fiber 105 for relaying, and a turning mirror 18, for causing the optical signal reflected by the partial reflection film 7d to fall on the coupling lens for relaying 19. The optical fiber 105 may alternatively be coupled to the side of the package 10 such that the turning prism 1 B is not used.

When the optical signal for reception S2, radiated by the optical fiber 101, is transmitted through the second coupling lens 13, the light component of the optical signal for reception S2, having the wavelength of 1.55 µm, is reflected by the partial reflection film 7d. The optical signal, reflected by the partial reflection film 7d, is reflected by the turning mirror 18 to fall on the coupling lens for relaying 19. The optical signal, incident on the coupling lens for relaying 19, falls on the optical fiber 105 and thence supplied to another optical transmissionlreception apparatus to complete the relaying of the optical signal.

Moreover, if a relaying prism 20 is provided between the optical path uplifting prism 7 and the turning mirror 18, as shown in Fig.20, the optical path uplifting prism 7, relaying prism 20 and the turning mirror 18 can be unified together. In this case, the adjustment and attachment in separate manufacturing steps on the semiconductor substrate 9 of the fuming mirror 18 and prism 7 are unnecessary to facilitate the manufacturing operations, thereby reducing of manufacturing cost

The optical signal, reflected by the partial reflection film 7d, may be caused to fall directly on the coupling lens 19 for relaying and then on the optical fiber 105 for relaying, without employing the relaying prism 20 nor the turning mirror 18, as shown in Fig.15. This optical fiber 105 for relaying has its distal end portion detachably mounted on the package 10 through a connector 21. By not employing optical components, such as turning mirror 18, the number of component parts can be reduced to facilitate manufacturing operations as well as to reduce manufacturing costs.

Since light beams of plural wavelengths, such as 1.3 µm and 1.55 µm, are transmitted through the second coupling lens 13, an anti-reflection film is desirably deposited for these light beams of plural wavelengths. Moreover, an anti-reflection film for the light beam with the wavelength of 1.55 µm may be deposited on the coupling lens for relaying 19.

In the above-described embodiment, the signal light is assumed to have wavelengths of 1.3 pm and 1.55 µm. However, optical signals of any other suitable wavelengths may be used with the preferred embodiment Moreover, in the above-described embodiment, the optical transmission/reception apparatus 1 is preferably used as an ONU for household use. However, the optical transmission/reception apparatus 1 according to the preferred embodiment may also be applied to a communication system for exchanging a variety of pieces of the information in a moving system, such as a car, an airplane or in a vessel, thus without being limited to the ONU for household use.

The optical transmission/reception apparatus 1 is connected to an optical fiber operating as a communication circuit in an optical communication circuit, in which an optical signal for transmission S1 is caused to fall on an end face 101 b of the optical fiber 101. With an optical signal for reception S2, transmitted through the optical fiber 101 to exit from the end face 101b of the optical fiber 101, being received by the optical transmission/reception apparatus 1. The optical transmissionlreception apparatus 1 includes a light source 11 from which the optical transmitting signal S1 is received, or light radiating or emitting means for radiating the optical signal for transmission S1. The light source may be another optical fiber such as the optical fiber 105 described above which transmits a signal from another apparatus 1. The apparatus 1 further includes a prism or light beam incidence means 7 for causing the optical signal for transmission radiated by the light source or light emitting or radiating means to be incident on the end face 101b of the optical fiber 101, and a photodetector or light reception means 8 for receiving the optical signal for reception S2 radiated from the end face 101b of the optical fiber 101. The light beam incidence means 7 causes a light beam of the optical signal for transmission S1 to be incident on the optical fiber 101 with a numerical aperture smaller than the numerical aperture of a light beam of the optical signal for reception S2 radiated from the end face 101b of the optical fiber.

Moreover, with the present optical transmission/reception apparatus, the light beam incidence means causes at least a portion of the wavefront of the optical signal for transmission S1 to be coincident and overlapped with at least a portion, and preferably only an outer portion, of the wavefront of the optical signal for reception S2.

Thus, with the present optical transmission/reception apparatus, 1, the optical system is simplified in structure to reduce the manufacturing cost.

That is, the present invention provides an optical transmission/reception apparatus which may be produced to a small size readily and inexpensively using simplified optical components and a simplified overall structure.

While exemplary drawings and specific embodiments of the present invention have been described and illustrated, it is to be understood that that the scope of the present invention is not to be limited to the particular embodiments discussed. Thus, the embodiments shall be regarded as illustrative rather than restrictive, and it should be understood that variations may be made in those embodiments by workers skilled in the arts without departing from the scope of the present invention as set forth in the claims that follow, and equivalents thereof.

In addition, in the method claims that follow, the steps have been ordered in selected typographical sequences. However, the sequences have been selected and so ordered for typographical convenience and are not intended to imply any particular order for performing the steps, except for those claims wherein a particular ordering of steps is expressly set forth or understood by one of ordinary skill in the art as being necessary.

## Claims

1. An optical transmission/reception apparatus having a coupling portion to be coupled to an end of an optical fiber, through which optical transmitting and receiving signals are transmitted, comprising:
light beam incidence means for directing said optical transmitting signal to be incident on an end face of said optical fiber when said optical fiber is coupled to said coupling portion; and
light reception means for receiving said optical receiving signal radiated from said end face of said optical fiber,
wherein said light beam incidence means directs said optical transmitting signal to be incident on said optical fiber with a numerical aperture smaller than a numerical aperture for the optical receiving signal.

2. The optical transmission/reception apparatus according to claim 1, wherein said light beam incidence means comprises a prism having a concave reflecting surface.

3. The optical transmission/reception apparatus according to claim 1. wherein said light beam incidence means comprises a prism having a cylindrical reflecting surface.

4. The optical transmission/reception apparatus according to claim 1. wherein said light beam incidence means directs at least a portion of the wavefront of the optical transmitting signal to be coincident and overlapped with only a portion of the wavefront of the optical receiving signal.

5. The optical transmission/reception apparatus according to claim 4, further comprising a first collimator element for collimating the optical receiving signal into a substantially parallel receiving light beam, and wherein said light beam incidence means includes a collimator portion for collimating the optical transmitting signal into a substantially parallel transmitting light beam.

6. The optical transmission/reception apparatus according to claim 5, wherein said light beam incidence means comprises a prism and said collimator portion comprises a concave reflecting surface.

7. The optical transmission/reception apparatus according to claim 5, wherein said light beam incidence means comprises a prism and said collimator portion comprises a cylindrical reflecting surface.

8. The optical transmission/reception apparatus according to claim 4, further comprising:
a first collimator element for collimating the optical receiving signal for reception into a substantially parallel receiving light beam; and
a second collimator element for collimating the optical transmitting signal into a substantially parallel transmiting light beam.

9. The optical transmission/reception apparatus according to daim 8, wherein the first collimator element comprises a collimating lens having an antireflection coating formed thereon.

10. The optical transmissionlreception apparatus according to claim 8, wherein the first collimator element comprises a collimating mirror.

11. The optical transmission/reception apparatus according to claim 8, wherein said light beam incidence means and said first collimator element are relatively disposed such that said optical transmitting signal, collimated into the substantially parallel transmitting light beam, is incident on said first collimator element and centered at a position offset from a center of the first collimator element.

12. The optical transmission/reception apparatus according to claim 8, wherein said light beam incidence means is disposed relative to said light reception means such that said optical receiving signal passes through said light beam incidence means to be received at said light reception means.

13. The optical transmission/reception apparatus according to claim 12, wherein an entrance surface through which said optical receiving signal passes through said light beam incidence means has an antireflection coating formed thereon.

14. The optical transmission/reception apparatus according to claim 1, wherein said light reception means is provided in an area substantially offset from an area at which a reflected portion of said optical transmitting signal which is reflected from the end face of said optical fiber is incident.

15. The optical transmission/reception apparatus according to claim 1, further comprising light interrupting means disposed to block a reflected portion of said optical transmitting signal which is reflected from the end face of said optical fiber.

16. The optical transmission/reception apparatus according to claim 1, further comprising wavelength selection means for separating components of different wavelengths of the optical receiving signal, and wherein said light reception means includes a plurality of light reception units each adapted to receive a specified wavelength component of said optical receiving signal separated by said wavelength selection means.

17. The optical transmission/reception apparatus according to claim 16, further comprising a light beam converging element for converging a separated component of said optical receiving signal at a corresponding one of said plurality of light reception units.

18. The optical transmission/reception apparatus according to claim 17, wherein said light beam converging element comprises a concave mirror.

19. The optical transmission/reception apparatus according to claim 17, wherein said light beam converging element comprises a converging lens.

20. The optical transmission/reception apparatus according to claim 16, further comprising a turning prism coupled at said wavelength selection means and configured to guide a separated component of said optical receiving signal separated by said wavelength selection means to a corresponding one of said plurality of light reception units.

21. The optical transmissionlreception apparatus according to claim 20, wherein said wavelength selection means comprises a wavelength selective partially reflecting surface coplanar with a first surface of said turning prism, and wherein a second surface of said turning prism internally reflects said separated component to be incident at said one of said plurality of light reception units.

22. The optical transmission/reception apparatus according to claim 16, wherein said light reception units comprise photodetectors for directly receiving said optical receiving signal at said optical transmission/reception apparatus.

23. The optical transmission/reception apparatus according to claim 16, wherein said light reception units comprise additional optical fibers coupled with said optical transmission reception apparatus at additional coupling portions for transmitting the signal to an outside detector.

24. The optical transmission/reception apparatus according to claim 1, further comprising:
wavelength selection means for separating components of different wavelengths of the optical receiving signal, and
relaying means for relaying to a second optical transmission/reception apparatus a specified wavelength component of said optical receiving signal separated by said wavelength selection means.

25. The optical transmission/reception apparatus according to claim 24, wherein said relaying means comprises:
a second coupling portion for coupling a first end of a second optical fiber of which a second end is connected to said second optical transmission/reception apparatus; and
a converging optic for converging said specified wavelength component to be incident at said first end of said second optical fiber when said second optical fiber is coupled to said second coupling portion.

26. The optical transmission/reception apparatus according to claim 25, further comprising a turning mirror for reflecting said specified wavelength component toward said converging optic.

27. The optical transmission/reception apparatus according to any of claims 25 or 24, wherein said converging optic is a converging lens.

28. The optical transmission/reception apparatus according to any of claims 25 or 24, wherein said converging optic is a converging mirror.

29. The optical transmission/reception apparatus according to claim 26, further comprising a relaying prism coupled at said wavelength selection means and at said turning mirror.

30. The optical transmission/reception apparatus according to claim 29, wherein said wavelength selection means comprises a wavelength selective partially reflecting surface coplanarly coupled with a first surface of said relaying prism, and wherein a second surface of said relaying prism is coplanarly coupled with said turning mirror.

31. The optical transmission/reception apparatus according to claim 24, wherein said wavelength selection means is configured to redirect said specified wavelength component of said optical receiving signal, and said relaying means comprises:
a second coupling portion for coupling a first end of a second optical fiber of which a second end is connected to said second optical transmissionlreception apparatus; and
a converging optic for directly receiving said specified wavelength component from said wavelength selection means, and converging said specified wavelength component at said first end of said second optical fiber when said second optical fiber is coupled at said second coupling portion.

32. The optical transmission/reception apparatus of Claim 1, further comprising an electrical circuit for transforming optical signals to electrical signals and vice-versa.

33. The optical transmission/reception apparatus of Claim 1, further comprising light source means from which said optical transmission signal is incident at said light beam incidence means.

34. An optical transmission/reception apparatus having a coupling portion to be coupled to an end of an optical fiber, through which optical transmitting and receiving signals are transmitted, comprising:
light beam incidence means for directing said optical transmitting signal to be incident on an end face of said optical fiber when said optical fiber is coupled to said coupling portion; and
light reception means for receiving said optical receiving signal radiated from said end face of said optical fiber,
wherein said light beam incidence means directs at least a portion of the wavefront of the optical transmitting signal to be coincident and overlapped with at least a portion of the wavefront of the optical receiving signal.

35. The optical transmission/reception apparatus of Claim 34, further comprising light source means from which said optical transmission signal is incident at said light beam incidence means.

36. An optical transmission/reception apparatus having a coupling portion to be coupled to an end of an optical fiber, through which optical transmitting and receiving signals are transmitted, comprising:
light beam incidence means for directing said optical transmitting signal to be incident on an end face of said optical fiber when said optical fiber is coupled to said coupling portion; and
light reception means for receiving said optical receiving signal radiated from said end face of said optical fiber,
wherein said light beam incidence means directs the entire wavefront of the optical transmitting signal to be coincident and overlapped with only a portion of the wavefront of the optical receiving signal.

37. The optical transmission/reception apparatus of Claim 36, further comprising light source means from which said optical transmission signal is incident at said light beam incidence means.

38. An optical transmission/reception apparatus having a coupling portion to be coupled to an end of an optical fiber, through which optical transmitting and receiving signals are transmitted, comprising:
light beam incidence means for directing said optical transmitting signal to be incident on an end face of said optical fiber when said optical fiber is coupled to said coupling portion; and
light reception means for receiving said optical receiving signal radiated from said end face of said optical fiber.
wherein said light beam incidence means directs at least a portion of the wavefront of the optical transmitting signal to be coincident and overlapped with only a portion of the wavefront of the optical receiving signal.

39. The optical transmission/reception apparatus according to claim 38, further comprising light source means from which said optical transmission signal is incident at said light beam incidence means.

40. The optical transmission/reception apparatus according to claim 38, wherein said light beam incidence means comprises a prism having a concave reflecting surface.

41. The optical transmission/reception apparatus according to claim 38, wherein said light beam incidence means comprises a prism having a cylindrical reflecting surface.

42. The optical transmission/reception apparatus according to claim 3B, further comprising:
a first collimator element for collimating the optical receiving signal into a substantially parallel receiving light beam; and
a second collimator element for collimating the optical transmitting signal into a substantially parallel transmitting light beam.

43. The optical transmission/reception apparatus according to claim 42, wherein said light beam incidence means and said first collimator element are relatively disposed such that said optical transmitting signal, collimated into the substantially parallel transmitting light beam, is incident on said first collimator element and centered at a position offset from a center of the first collimator element.

44. The optical transmission/reception apparatus according to claim 42, wherein said light beam incidence means is disposed relative to said light reception means such that said optical receiving signal passes through said light beam incidence means to be received at said light reception means.

45. The optical transmission/reception apparatus according to claim 44, wherein an entrance surface through which said optical receiving signal passes through said light beam incidence means has an antireflection coating formed thereon.

46. The optical transmission/reception apparatus according to claim 38, further comprising a first collimator element for collimating the optical receiving signal into a substantially parallel receiving light beam, and wherein said light beam incidence means includes a collimator portion for collimating the optical transmitting signal into a substantially parallel transmitting light beam.

47. The optical transmission/reception apparatus according to claim 46, wherein said light beam incidence means comprises a prism and said collimator portion comprises a concave reflecting surface.

48. The optical transmission/reception apparatus according to claim 46, wherein said light beam incidence means comprises a prism and said collimator portion comprises a cylindrical reflecting surface.

49. The optical transmission/reception apparatus according to claim 46, wherein said light beam incidence means and said first collimator element are relatively disposed such that said optical transmitting signal, collimated into the substantially parallel transmitting light beam, is incident on said first collimator element and centered at a position offset from a center of the first collimator element.

50. The optical transmission/reception apparatus according to claim 46. wherein said light beam incidence means is disposed relative to said light reception means such that said optical receiving signal passes through said light beam incidence means to be received at said light reception means.

51. The optical transmission/reception apparatus according to claim 50, wherein an entrance surface through which said optical receiving signal passes through said light beam incidence means has an antireflection coating formed thereon.

52. The optical transmission/reception apparatus according to claim 38, wherein said light reception means is provided in an area substantially offset from an area at which a reflected portion of said optical transmitting signal which is reflected from the end face of said optical fiber is incident.

53. The optical transmission/reception apparatus according to claim 38, further comprising light interrupting means disposed to block a reflected portion of said optical transmitting signal which is reflected from the end face of said optical fiber.

54. The optical transmission/reception apparatus according to claim 38, further comprising wavelength selection means for separating components of different wavelengths of the optical receiving signal, and wherein said light reception means includes a plurality of light reception units each adapted to receive a specified wavelength component of said optical receiving signal separated by said wavelength selection means.

55. The optical transmission/reception apparatus according to claim 54, further comprising a light beam converging element for converging a separated component of said optical receiving signal at a corresponding one of said plurality of light reception units.

56. The optical transmission/reception apparatus according to claim 55, wherein said fight beam converging element comprises a concave mirror.

57. The optical transmission/reception apparatus according to claim 55, wherein said light beam converging element comprises a converging lens.

58. The optical transmission/reception apparatus according to claim 54, further comprising a turning prism coupled at said wavelength selection means and configured to guide a separated component of said optical receiving signal separated by said wavelength selection means to a corresponding one of said plurality of light reception units.

59. The optical transmission/reception apparatus according to claim 58, wherein said wavelength selection means comprises a wavelength selective partially reflecting surface coplanar with a first surface of said turning prism, and wherein a second surface of said turning prism internally reflects said separated component to be incident at said one of said plurality of light reception units.

60. The optical transmission/reception apparatus according to claim 54, wherein said light reception units comprise photodetectors for directly receiving said optical receiving signal at said optical transmission/reception apparatus.

61. The optical transmission/reception apparatus according to claim 54, wherein said light reception units comprise additional optical fibers coupled with said optical transmission reception apparatus at additional coupling portions for transmitting the signal to an outside detector.

62. The optical transmission/reception apparatus according to claim 38, further comprising:
wavelength selection means for separating components of different wavelengths of the optical receiving signal, and
relaying means for relaying to a second optical transmission/reception apparatus a specified wavelength component of said optical receiving signal separated by said wavelength selection means.

63. The optical transmission/reception apparatus according to claim 62, wherein said relaying means comprises:
a second coupling portion for coupling a first end of a second optical fiber of which a second end is connected to said second optical transmission/reception apparatus; and
a converging optic for converging said specified wavelength component to be incident at said first end of said second optical fiber when said second optical fiber is coupled to said second coupling portion.

64. The optical transmission/reception apparatus according to claim 63, further comprising a turning mirror for reflecting said specified wavelength component toward said converging optic.

65. The optical transmissionlreception apparatus according to claim 64, further comprising a relaying prism coupled at said wavelength selection means and at said turning mirror.

66. The optical transmissionlreception apparatus according to claim 64, wherein said wavelength selection means comprises a wavelength selective partially reflecting surface coplanarly coupled with a first surface of said relaying prism, and wherein a second surface of said relaying prism is coplanarly coupled with said turning mirror.

67. The optical transmission/reception apparatus according to claim 63, wherein said converging optic is a converging lens.

68. The optical transmission/reception apparatus according to claim 63, wherein said converging optic is a converging mirror.

69. The optical transmission reception apparatus according to claim 62, wherein said wavelength selection means is configured to redirect said specified wavelength component of said optical receiving signal, and said relaying means comprises:
a second coupling portion for coupling a first end of a second optical fiber of which a second end is connected to said second optical transmission/reception apparatus; and
a converging optic for directly receiving said specified wavelength component from said wavelength selection means, and converging said specified wavelength component at said first end of said second optical fiber when said second optical fiber is coupled at said second coupling portion.

70. The optical transmission/reception apparatus according to claim 38, further comprising an electrical circuit for transforming optical signals to electrical signals and vice-versa.

71. An optical transmissionlreception apparatus having a coupling portion to be coupled to an end of an optical fiber, through which optical transmitting and receiving signals are transmitted, comprising:
a prism for directing said optical transmitting signal to be incident on an end face of said optical fiber when said optical fiber is coupled to said coupling portion; and
a photodetector for receiving said optical receiving signal radiated from said end face of said optical fiber,
wherein said light beam incidence means directs said optical transmitting signal to be incident on said optical fiber with a numerical aperture smaller than a numerical aperture for the optical receiving signal.

72. The optical transmission/reception apparatus according to claim 71. further comprising a light source from which an optical signal is incident at said prism.

73. The optical transmission/reception apparatus according to claim 71, wherein said prism has a concave reflecting surface.

74. The optical transmission/reception apparatus according to claim 71, wherein said prism has a cylindrical reflecting surface.

75. The optical transmission/reception apparatus according to claim 71, wherein said prism directs at least a portion of the wavefront of the optical transmitting signal to be coincident and overlapped with at least a portion of the wavefront of the optical receiving signal.

76. The optical transmission/reception apparatus according to claim 75, further comprising a first collimating optic for collimating the optical receiving signal into a substantially parallel receiving light beam, and wherein said prism includes a collimating portion for collimating the optical transmitting signal into a substantially parallel transmitting light beam.

77. The optical transmission/reception apparatus according to claim 76, wherein said collimating portion of said prism comprises a concave reflecting surface.

78. The optical transmission/reception apparatus according to claim 76, wherein said collimating portion of said prism comprises a cylindrical reflecting surface.

79. The optical transmission/reception apparatus according to claim 75, further comprising:
a first collimating optic for collimating the optical receiving signal into a substantially parallel receiving light beam; and
a second collimating optic for collimating the optical transmitting signal into a substantially parallel transmitting light beam.

80. The optical transmission/reception apparatus according to claim 79, wherein said prism and said first collimating optic are relatively disposed such that said optical transmitting signal, collimated into the substantially parallel transmitting light beam, is incident on said first collimating optic and centered at a position offset from a center of the first collimating optic.

81. The optical transmission/reception apparatus according to claim 79, wherein said prism is disposed relative to said photodetector such that said optical receiving signal passes through said prism to be received at said photodetector.

82. The optical transmission/reception apparatus according to claim 71, wherein said photodetector is provided in an area substantially offset from an area at which a reflected portion of said optical transmitting signal which is reflected from the end face of said optical fiber is incident.

83. The optical transmissionlreception apparatus according to claim 71, further comprising a beam stop disposed to block a reflected portion of said optical transmitting signal which is reflected from the end face of said optical fiber

84. The optical transmission/reception apparatus according to claim 71, further comprising a second photodetector, wherein said prism comprises a wavelength selecting surface for separating components of different wavelengths of the optical receiving signal, and wherein said first and second photodetectors are adapted to respectively receive first and second wavelength components of said optical receiving signal separated by said wavelength selecting surface of said prism.

85. The optical transmission/reception apparatus according to claim 84, further comprising a turning prism coupled at said wavelength selecting surface of said prism and configured to guide a separated component of said optical receiving signal separated by said wavelength selecting surface to said second photodetector.

86. The optical transmission/reception apparatus according to claim 71, further comprising a second coupling portion to be coupled to an end of a second optical fiber, and wherein said prism comprises a wavelength selecting surface for separating components of different wavelengths of the optical receiving signal, and wherein said photodetector and an end face of said second optical fiber, when said second optical fiber is coupled to said second coupling portion, are adapted to respectively receive first and second wavelength components of said optical receiving signal separated by said wavelength selecting surface of said prism, said second optical fiber for transmitting said second wavelength component of said optical receiving signal to an outside detector.

87. The optical transmission/reception apparatus according to claim 71, wherein said prism comprises a wavelength selecting surface for separating components of different wavelengths of the optical receiving signal, and said apparatus further comprises an optical relay for relaying to a second optical transmission/reception apparatus a specified wavelength component of said optical receiving signal separated by said wavelength selecting surface of said prism.

88. The optical transmission/reception apparatus according to claim 87, wherein said optical relay comprises:
a second coupling portion for coupling a first end of a second optical fiber of which a second end is connected to said second optical transmission/reception apparatus; and
a converging optic for converging said specified wavelength component to be incident at said first end of said second optical fiber when said second optical fiber is coupled to said second coupling portion.

89. The optical transmission/reception apparatus according to claim 88, wherein said optical relay further comprises a turning mirror for reflecting said specified wavelength component toward said converging optic.

90. The optical transmission/reception apparatus according to claim 89, wherein said optical relay further comprises a relaying prism coupled at said wavelength selecting surface and at said turning mirror.

91. The optical transmission/reception apparatus of Claim 71, further comprising an electrical circuit for transforming optical signals to electrical signals and vice-versa.

92. An optical transmission/reception apparatus having a coupling portion to be coupled to an end of an optical fiber, through which optical transmitting and receiving signals are transmitted, comprising:
a prism for directing said optical transmitting signal to be incident on an end face of said optical fiber when said optical fiber is coupled to said coupling portion; and
a photodetector for receiving said optical receiving signal radiated from said end face of said optical fiber,
wherein said prism directs at least a portion of the wavefront of the optical transmitting signal to be coincident and overlapped with at least a portion of the wavefront of the optical receiving signal.

93. The optical transmission/reception apparatus according to claim 92, further comprising a light source from which said optical transmitting signal is incident at said prism.

94. An optical transmission/reception apparatus having a coupling portion to be coupled to an end of an optical fiber, through which optical transmitting and receiving signals are transmitted, comprising:
a prism for directing said optical transmitting signal to be incident on an end face of said optical fiber when said optical fiber is coupled to said coupling portion; and
a photodetector for receiving said optical receiving signal radiated from said end face of said optical fiber,
wherein said prism directs the entire wavefront of the optical transmitting signal to be coincident and overlapped with only a portion of the wavefront of the optical receiving signal.

95. The optical transmission/reception apparatus according to claim 94, further comprising a light source from which said optical transmitting signal is incident at said prism.

96. An optical transmission/reception apparatus having a coupling portion to be coupled to an end of an optical fiber, through which optical transmitting and receiving signals are transmitted, comprising:
a prism for directing said optical transmitting signal to be incident on an end face of said optical fiber when said optical fiber is coupled to said coupling portion; and
a photodetector for receiving said optical receiving signal radiated from said end face of said optical fiber,
wherein said prism directs at least a portion of the wavefront of the optical transmitting signal to be coincident and overlapped with only a portion of the wavefront of the optical receiving signal.

97. The optical transmission/reception apparatus according to claim 96, further comprising a light source from which said optical transmitting signal is incident at said prism.

98. The optical transmission/reception apparatus according to claim 96, wherein said prism has a concave reflecting surface.

99. The optical transmission/reception apparatus according to claim 96, wherein said prism has a cylindrical reflecting surface.

100. The optical transmission/reception apparatus according to claim 96, further comprising:
a first collimating optic for collimating the optical receiving signal into a substantially parallel receiving light beam; and
a second collimating optic for collimating the optical transmitting signal into a substantially parallel transmitting light beam.

101. The optical transmission/reception apparatus according to claim 100, wherein said prism and said first collimating optic are relatively disposed such that said optical transmitting signal, collimated into the substantially parallel transmitting light beam, is incident on said first collimating optic and centered at a position offset from a center of the first collimating optic.

102. The optical transmission/reception apparatus according to claim 100, wherein said prism is disposed relative to said photodetector such that said optical receiving signal passes through said prism to be received at said photodetector.

103. The optical transmission/reception apparatus according to claim 96, further comprising a first collimating optic for collimating the optical receiving signal into a substantially parallel receiving light beam, and wherein said prism includes a collimating portion for collimating the optical transmitting signal into a substantially parallel transmitting light beam.

104. The optical transmission/reception apparatus according to claim 103, wherein said collimating portion of said prism comprises a concave reflecting surface.

105. The optical transmission/reception apparatus according to claim 103, wherein said collimating portion of said prism comprises a cylindrical reflecting surface.

106. The optical transmission/reception apparatus according to claim 96, wherein said photodetector is provided in an area substantially offset from an area at which a reflected portion of said optical transmitting signal which is reflected from the end face of said optical fiber is incident.

107. The optical transmission/reception apparatus according to claim 96, further comprising a beam stop disposed to block a reflected portion of said optical transmitting signal which is reflected from the end face of said optical fiber.

108. The optical transmission/reception apparatus according to claim 96, further comprising a second photodetector, wherein said prism comprises a wavelength selecting surface for separating components of different wavelengths of the optical receiving signal, and wherein said first and second photodetectors are adapted to respectively receive first and second wavelength components of said optical receiving signal separated by said wavelength selecting surface of said prism.

109. The optical transmission/reception apparatus according to claim 108, further comprising a turning prism coupled at said wavelength selecting surface of said directing prism and configured to guide a separated component of said optical receiving signal separated by said wavelength selecting surface to said second photodetector.

110. The optical transmission/reception apparatus according to claim 96, further comprising a second coupling portion to be coupled to an end of a second optical fiber, and wherein said prism comprises a wavelength selecting surface for separating components of different wavelengths of the optical receiving signal, and wherein said photodetector and an end face of said second optical fiber, when said second optical fiber is coupled to said second coupling portion, are adapted to respectively receive first and second wavelength components of said optical receiving signal separated by said wavelength selecting surface of said prism, said second optical fiber for transmitting said second wavelength component of said optical receiving signal to an outside detector.

111. The optical transmission/reception apparatus according to claim 96, wherein said prism comprises a wavelength selecting surface for separating components of different wavelengths of the optical receiving signal, and said apparatus further comprises an optical relay for relaying to a second optical transmission/reception apparatus a specified wavelength component of said optical receiving signal separated by said wavelength selecting surface of said prism.

112. The optical transmission/reception apparatus according to claim 111, wherein said optical relay comprises:
a second coupling portion for coupling a first end of a second optical fiber of which a second end is connected to said second optical transmission/reception apparatus; and
a converging optic for converging said specified wavelength component to be incident at said first end of said second optical fiber when said second optical fiber is coupled to said second coupling portion.

113. The optical transmission/reception apparatus according to claim 112, wherein said optical relay further comprises a turning mirror for reflecting said specified wavelength component toward said converging optic.

114. The optical transmission/reception apparatus according to claim 113, wherein said optical relay further comprises a relaying prism coupled at said wavelength selecting surface and at said turning mirror.

115. The optical transmission/reception apparatus according to claim 96, further comprising an electrical circuit for transforming optical signals to electrical signals and vice-versa.

116. A network architecture for communication of information to information equipment, comprising:
an optical transmission/reception apparatus having an optical fiber coupling portion and a second information access coupling portion;
a station through which information is transmitted between a network and said optical transmission/reception apparatus
an optical fiber coupling to said optical fiber coupling portion, through which optical transmitting and receiving signals are transmitted between said station and said optical transmission/reception apparatus; and
information equipment connected to said second information access coupling portion of said optical transmissionlreception apparatus,
wherein said optical transmission/reception apparatus comprises:
a prism for directing said optical transmitting signal to be incident on an end face of said optical fiber when said optical fiber is coupled to said coupling portion; and
a photodetector for receiving said optical receiving signal radiated from said end face of said optical fiber,
wherein said prism directs said optical transmitting signal to be incident on said optical fiber with a numerical aperture smaller than a numerical aperture for the optical receiving signal.

117. The network architecture of claim 116, wherein said optical transmission/reception apparatus further comprises a light source from which an optical signal is incident at said prism.

118. The network architecture of Claim 116, wherein said optical transmission/reception apparatus further comprises:
a first collimator element for collimating the optical receiving signal into a substantially parallel receiving light beam; and
a second collimator element for collimating the optical transmitting signal into a substantially parallel transmitting light beam.

119. The network architecture of claim 118, wherein said prism and said first collimator element are relatively disposed such that said optical transmitting signal, collimated into the substantially parallel transmitting light beam, is incident on said first collimator element and centered at a position offset from a center of the first collimator element

120. The network architecture of claim 119, wherein said prism is disposed relative to said photodetector such that said optical receiving signal passes through said prism to be received at said photodetector.

121. The network architecture of Claim 116, wherein said prism directs at least a portion of the wavefront of the optical transmitting signal to be coincident and overlapped with only a portion of the wavefront of the optical receiving signal.

122. The network architecture of Claim 121, wherein said optical transmission/reception apparatus further comprises:
a first collimator element for collimating the optical receiving signal into a substantially parallel receiving light beam; and
a second collimator element for collimating the optical transmitting signal into a substantially parallel transmitting light beam.

123. The network architecture of claim 122, wherein said prism and said first collimator element are relatively disposed such that said optical transmitting signal, collimated into the substantially parallel transmitting light beam, is incident on said first collimator element and centered at a position offset from a center of the first collimator element.

124. The network architecture of claim 122, wherein said prism is disposed relative to said photodetector such that said optical receiving signal passes through said prism to be received at said photodetector.

125. A network architecture for communication of information to information equipment, comprising:
an optical transmission/reception apparatus having an optical fiber coupling portion and a second information access coupling portion;
a station through which information is transmitted between a network and said optical transmission/reception apparatus
an optical fiber coupling to said optical fiber coupling portion, through which optical transmitting and receiving signals are transmitted between said station and said optical transmission/reception apparatus; and
information equipment connected to said second information access coupling portion of said optical transmission/reception apparatus,
wherein said optical transmission/reception apparatus comprises:
a prism for directing said optical transmitting signal to be incident on an end face of said optical fiber when said optical fiber is coupled to said coupling portion; and
a photodetector for receiving said optical receiving signal radiated from said end face of said optical fiber,
wherein said prism directs at least a portion of the wavefront of the optical transmitting signal to be coincident and overlapped with only a portion of the wavefront of the optical receiving signal.

126. The network architecture of claim 125, wherein said optical/transmissior/reception apparatus further comprises a light source from which said optical transmitting signal is incident at said prism.

127. The network architecture of claim 125, wherein said optical transmission/reception apparatus further comprises:
a first collimator element for collimating the optical receiving signal into a substantially parallel receiving light beam; and
a second collimator element for collimating the optical transmitting signal into a substantially parallel transmitting light beam.

128. The network architecture of claim 127, wherein said prism and said first collimator element are relatively disposed such that said optical transmitting signal, collimated into the substantially parallel transmitting light beam, is incident on said first collimator element and centered at a position offset from a center of the first colimator element.

129. The network architecture of daim 128, wherein said prism Is disposed relative to said photodetector such that said optical receiving signal passes through said light beam incidence means to be received at said light reception means.

130. A method for communicating information in the form of optical transmitting and receiving signals between a network and information equipment using an optical transmission/reception apparatus having a coupling portion for coupling to an optical fiber, comprising the steps of:
receiving said optical transmitting signal from a light source;
directing said optical transmitting signal with a directing optic to be incident on an end face of said optical fiber with a numerical aperture smaller than a numerical aperture for the optical receiving signal when said optical fiber is coupled to said coupling portion; and
receiving said optical receiving signal radiated from said end face of said optical fiber.

131. The method of claim 130, wherein the directing step includes directing at least a portion of the wavefront of the optical transmitting signal to be coincident and overlapped with only a portion of the wavefront of the optical receiving signal.

132. The method of claim 131, further comprising the steps of:
collimating the optical receiving signal into a substantially parallel receiving light beam with a first collimating optic; and
collimating the optical transmitting signal into a substantially parallel transmitting light beam with a second collimating optic.

133. The method of claim 132, further comprising the step of directing said collimated optical transmitting signal to be incident on a said first collimating optic and centered at a position offset from a center of the first collimating optic.

134. The method of claim 133, further comprising the step of directing said optical receiving signal to pass through said directing optic and to be received at a photodetector.

135. The method of claim 130, further comprising the step of separating components of different wavelengths of the optical receiving signal, and said optical receiving signal reception step includes receiving said different wavelength components at different light receiving units.

136. The method of claim 130, further comprising the steps of:
separating components of different wavelengths of the optical receiving signal; and
relaying to a second optical transmission/reception apparatus a specified wavelength component of said optical receiving signal separated at said separating step.

137. The method of claim 136, further comprising the steps of:
coupling a first end of a second optical fiber of which a second end is connected to said second optical transmission/reception apparatus; and
converging said specified wavelength component to be incident at said first end of said second optical fiber.

138. The method of Claim 130, further comprising the step of transforming optical signals to electrical signals and vice-versa.

139. A method for communicating information in the form of optical transmitting and receiving signals between a network and information equipment using an optical transmission/reception apparatus having a coupling portion for coupling to an optical fiber, comprising the steps of:
receiving said optical transmitting signal from a light source;
directing at least a portion of said optical transmitting signal with a directing optic to be coincident and overlapped with only a portion of the wavefront of the optical receiving signal; and
receiving said optical receiving signal radiated from said end face of said optical fiber

140. The method of claim 139, further comprising the steps of:
collimating the optical receiving signal into a substantially parallel receiving light beam with a first collimating optic; and
collimating the optical transmitting signal into a substantially parallel transmitting light beam with a second collimating optic.

141. The method of claim 139, further comprising the step of directing said collimated optical transmitting signal to be incident on a said first collimating optic and centered at a position offset from a center of the first collimating optic.

142. The method of claim 139, further comprising the step of directing said optical receiving signal to pass through said directing optic and to be received at a photodetector.

143. The method of claim 139, further comprising the step of separating components of different wavelengths of the optical receiving signal, and said optical receiving signal reception step includes receiving said different wavelength components at different light receiving units.

144. The method of claim 139, further comprising the steps of:
separating components of different wavelengths of the optical receiving signal; and
relaying to a second optical transmission/reception apparatus a specified wavelength component of said optical receiving signal separated at said separating step.

145. The method of claim 144, further comprising the steps of:
coupling a first end of a second optical fiber of which a second end is connected to said second optical transmission/reception apparatus; and
converging said specified wavelength component to be incident at said first end of said second optical fiber.

146. The method of claim 139, further comprising the step of transforming optical signals to electrical signals and vice-versa.
